# FASCICULE DE BREVET EUROPEEN

(11) **EP 3 149 824 B1**
(45) Date de publication et mention de la délivrance du brevet: **20.06.2018**
(21) Numéro de dépôt: 15732824.6
(22) Date de dépôt: 01.06.2015
(51) Int. Cl.: H02J 3/14, H02J 13/00, H02J 9/00, H02H 3/08, H02H 3/42

(54) **TABLEAU ÉLECTRIQUE ET PROCÉDÉ DE GESTION ASSOCIÉ**
ELEKTRISCHE SCHALTTAFEL UND ZUGEHÖRIGES VERWALTUNGSVERFAHREN
ELECTRIC BOARD AND ASSOCIATED MANAGEMENT METHOD

(30) Priorité: 02.06.2014 FR 1454968
(43) Date de publication de la demande: 05.04.2017
(73) Titulaire: Ogga, 69003 Lyon (FR)
(72) Inventeur: GAGNAT, Stéphane, F-69007 Lyon (FR)
(74) Mandataire: Chevalier, Renaud Philippe
(86) Numéro de dépôt international: PCT/FR2015/051429
(87) Numéro de publication internationale: WO 2015/185836

(56) Documents cités:
- EP-A2- 2 648 313
- WO-A1-2013/111858
- WO-A1-2013/184601

## Description

L'invention concerne le domaine du contrôle de la gestion d'énergie des appareils électriques domestiques, par exemple des appareils de petit et gros électroménager ou encore des appareils de chauffage électriques ou pilotés électriquement et des appareils contrôlables par un contact électrique ou un signal électrique de pilotage comme par exemple une électrovanne de chauffage collectif, une chaudière à gaz, etc.

On entendra par contrôle de la consommation d'énergie, le fait de pouvoir couper ou établir l'alimentation électrique d'un appareil électrique ou de piloter un appareil à l'aide d'un signal électrique.

Il existe différents moyens pour contrôler la consommation d'énergie d'un appareil électrique.

Généralement, on utilise les tableaux électriques équipés de disjoncteurs parfois couplés à des contacteurs pour contrôler la consommation électrique d'appareils. Chaque disjoncteur est associé à une section de ligne électrique et/ou à un appareil particulier branché. Le principe du disjoncteur est de permettre la protection d'une installation électrique en cas de défaut majeur ou danger électrique pour l'installation, en détectant un défaut thermiquement, magnétiquement ou électroniquement. En outre, les contacteurs permettent de commander un circuit électrique directement dans le tableau et de couper ou établir le passage du courant par une commande électrique externe.

L'inconvénient des tableaux électriques décrits ci-dessus, réside dans le fait que, d'une part, il n'est pas possible de prévenir un défaut autre que majeur sur l'installation, et d'autre part, la commande du contrôle de la consommation est externe au tableau électrique, ce qui multiplie les appareils et interfaces.

Alternativement aux tableaux électriques, il existe des programmateurs externes qui se branchent entre la prise et l'appareil électrique pour contrôler la consommation électrique dudit appareil. Ces programmateurs sont par exemple des programmateurs mécaniques comportant un calendrier intégré et permettant de gérer l'alimentation électrique de l'appareil sans passer par le tableau électrique. Cependant, ces programmateurs ne permettent pas de détecter les défauts des appareils même mineurs et sont limités à une programmation prédéfinie. En outre, pour gérer la consommation électrique de chaque appareil d'un local, il faut autant de programmateurs que d'appareils, ce qui est coûteux et incommode puisque la programmation doit être réalisée individuellement pour chacun des programmateurs. On notera enfin les documents de l'état de l'art suivant:

Tout d'abord, le document WO 2013/184601 A1 qui décrit un système et un procédé de distribution d'énergie comprenant un tableau électrique se différenciant de la revendication indépendante 1 en ce que, dans mêmes termes de la revendication, le tableau électrique intègre un ensemble de contacteur et que l'ensemble de contacteur est positionné électriquement dans le tableau électrique.

Puis le document EP 2 648 313 A2, qui décrit également un tableau électrique un procédé de contrôle d'une installation électrique comprenant ledit tableau électrique.

L'invention a pour but de remédier à tout ou partie des inconvénients précités. L'invention est définie par les caractéristiques des revendications indépendantes. Les modes de réalisations préférés sont définis par les revendications dépendantes.

L'invention a pour objet un tableau électrique selon la revendication 1. Dans la présente demande, on entendra par local une partie de bâtiment d'au moins une pièce caractérisé par son utilisation personnelle, professionnelle, administrative, technique, etc.

Dans la présente demande, on entendra par niveau de consommation électrique d'un local, le niveau de consommation électrique global dans le local.

Bien entendu, l'invention n'est pas limitée à l'évaluation de la consommation électrique d'un seul appareil électrique et concerne également l'évaluation de la consommation d'un ensemble d'appareils électriques reliés à un même circuit électrique ou non ou encore à l'évaluation du niveau de consommation électrique du local.

Selon une caractéristique de l'invention, la valeur théorique associée à l'état de veille est une valeur apprise par l'ensemble de contacteur en fonction des habitudes des occupants du local traduit notamment par l'évaluation du niveau de consommation.

L'ensemble de contacteur selon l'invention, permet d'évaluer la consommation électrique de l'appareil électrique avec lequel il est apparenté et permet grâce à cette évaluation de prévenir les défauts même mineurs de l'installation électrique et de couper ou d'établir l'alimentation électrique de l'appareil électrique en fonction des besoins, et ce, de manière simple.

L'ensemble de contacteur selon l'invention permet en outre d'automatiser la gestion énergétique d'un local. Ainsi, il est possible d'automatiser la programmation du chauffage par exemple et/ou la coupure des appareils électriques en veille en fonction des habitudes de vie des occupants du local.

Selon une caractéristique de l'invention, l'ensemble de contacteur comprend un boitier de mesure de consommation d'énergie ou de comptage formant un contacteur électrique, dans lequel sont placés l'unité de commande, le sectionneur d'alimentation électrique au moins un organe de mesure et l'unité d'évaluation. Ainsi, tous les composants de l'ensemble de contacteur sont regroupés dans un ensemble structurel unique. Grâce à cette configuration, l'ensemble de contacteur est compact et s'intègre facilement dans un tableau électrique sans nécessiter d'organe de commande externe.

Selon une caractéristique de l'invention, l'organe de mesure est conçu pour mesurer la tension ou l'intensité. Préférentiellement, l'organe de mesure est positionné électriquement en amont du sectionneur d'alimentation.

Selon une caractéristique de l'invention, l'unité d'évaluation est un microcontrôleur.

Selon une caractéristique de l'invention, l'ensemble de contacteur est configuré pour coopérer avec un interrupteur de présence ou un détecteur de présence actionné par les occupants du local. Ainsi, lorsque l'interrupteur de présence ou le détecteur de présence est actionné pour indiquer une absence, l'unité d'évaluation considère que le niveau de consommation électrique est sensiblement égal à une valeur théorique correspondant à l'état de veille indiquant une absence des occupants du local et commande au sectionneur de couper l'alimentation électrique du ou des appareils électriques.

Selon une caractéristique de l'invention, un niveau d'activité est déterminé par l'unité d'évaluation à partir du niveau de consommation mesuré et/ou à partir d'une information transmise par l'interrupteur de présence ou le détecteur de présence. Le niveau d'activité permet de déterminer si le local est vide ou occupé et si les occupants sont actifs ou inactifs. Avantageusement, l'ensemble de contacteur selon l'invention réalise un apprentissage des habitudes et permet avantageusement d'anticiper des habitudes récurrentes.

Selon une caractéristique de l'invention, l'unité d'évaluation est conçue pour enregistrer les données mesurées et déterminer à partir des enregistrements une routine de consommation.

Selon une caractéristique de l'invention, la routine de consommation peut être déterminée sur une période prédéterminée par exemple : jour par jour et/ou semaine par semaine et/ou mois par mois et/ou année par année. Grâce à la détermination de routine, l'ensemble de contacteur gère de manière autonome la consommation d'énergie des appareils en appliquant une routine de consommation.

En outre, selon une caractéristique de l'invention, l'unité d'évaluation peut, à partir des consommations énergétiques mesurées d'au moins un appareil électrique déterminer un état de local vide et/ou un état de local occupé avec occupants actifs et/ou un état de local occupé avec occupants inactifs. Ainsi, l'ensemble de contacteur est à même d'apporter une réponse efficace, pouvant s'apparenter à une auto-programmation, et permet de régler au mieux le chauffage, et de couper le ou les circuits électriques quand cela est pertinent.

Selon une caractéristique de l'invention, l'organe de communication est conçu pour transmettre l'alerte via un câble. Alternativement, l'organe de communication est conçu pour transmettre l'alerte de manière sans fil, de préférence par ondes radio.

Avantageusement, l'ensemble de contacteur communique avec un dispositif d'affichage externe, de préférence par WIFI.

Selon une caractéristique de l'invention, ledit ensemble de contacteur comprend au moins un organe de communication conçu pour transmettre une alerte visuelle et/ou sonore et/ou un ordre à un périphérique à partir de l'évaluation des données mesurées. L'alerte permet de prévenir l'utilisateur d'un défaut éventuellement mineur de l'appareil évalué. Plus généralement, si l'alerte est visuelle transmet l'état de l'appareil électrique évalué sur, par exemple, à un moniteur externe ou intégré au tableau électrique.

Avantageusement, l'ensemble de contacteur est autonome et conçu pour prédire à partir de la mémorisation des consommations passées d'un appareil électrique, un défaut à venir sur l'appareil électrique en question.

L'invention a pour objet un tableau électrique comprenant au moins un disjoncteur relatif à un appareil électrique, le tableau électrique comprenant en outre au moins un ensemble de contacteur selon l'invention, ledit ensemble de contacteur étant positionné électriquement, dans le tableau électrique.

Avantageusement, l'ensemble de contacteur est compatible avec n'importe quel tableau électrique standard et est intégré dans ledit tableau de la même manière qu'un disjoncteur.

Selon une caractéristique de l'invention, l'ensemble de contacteur comprend au moins un organe de mesure extérieur configuré pour mesurer une température ambiante extérieure, l'unité d'évaluation étant configurée pour coopérer avec le sectionneur d'alimentation électrique pour gérer un ou plusieurs appareils de chauffage électriques en fonction de la mesure de la température ambiante extérieure.

Alternativement, la température ambiante extérieure est mesurée et transmise à l'unité d'évaluation par une transmission radio ou de façon filaire.

Ainsi, il est possible grâce à l'ensemble de contacteur selon l'invention de gérer le système de chauffage d'un local de manière adaptée et automatique notamment en fonction de la température extérieure mesurée.

Selon une caractéristique de l'invention, le au moins un organe de mesure extérieur est positionné hors du boitier de l'ensemble de contacteur.

Selon une caractéristique de l'invention, l'organe de mesure extérieur peut être un organe de mesure de courant et/ou un organe de mesure de tension et/ou un compteur d'impulsion.

Selon une caractéristique de l'invention, l'unité d'évaluation est configurée pour recevoir des informations provenant dudit au moins un organe de mesure extérieur, ledit au moins un organe de mesure extérieur étant relié à l'unité d'évaluation soit de manière sans fil soit de manière filaire.

L'invention a également pour objet un procédé de gestion de la consommation électrique d'un appareil électrique comprenant les étapes suivantes :
- mesure de la tension et/ou mesure de l'intensité par un organe de mesure d'un ensemble de contacteur selon l'invention,
- enregistrement de la mesure de la tension et/ou de l'intensité par l'unité d'évaluation de l'ensemble de contacteur,
- analyse de la consommation électrique à partir de la comparaison d'au moins deux mesures de tension et/ou de l'intensité par l'unité d'évaluation,
- détermination du niveau de consommation en comparant les mesures analysées avec une valeur théorique de consommation correspondant à la consommation normale en veille de l'appareil par l'unité d'évaluation,
- détermination d'une routine de consommation à partir du ou des enregistrements de la mesure de la tension et/ou de l'intensité.

Selon une caractéristique de l'invention, la détermination d'une routine de consommation est réalisée sur une période prédéterminée.

Selon une caractéristique de l'invention, le procédé de gestion comprend une étape d'application de la routine de consommation.

Selon une caractéristique de l'invention, ladite étape d'application comprend au moins une sous-étape de coupure de l'alimentation électrique et au moins une sous-étape d'établissement de l'alimentation électrique.

Selon une caractéristique de l'invention, une étape de coupure de l'alimentation électrique par le sectionneur et/ou une étape d'alerte au moyen de l'organe de communication de l'ensemble de contacteur sont réalisées selon le niveau de consommation déterminé.

Selon une caractéristique de l'invention, une étape préliminaire de mise en route du procédé de gestion est réalisée avant l'étape de mesure.

Préférentiellement, la mise en route du procédé de gestion est déclenchée en fonction d'un événement extérieur tel que par exemple l'actionnement d'un interrupteur de mise en veille de l'installation. Ainsi, l'alimentation électrique des appareils électriques en veille associés à un ensemble de contacteur, est coupée lorsque l'interrupteur est actionné. Alternativement, la mise en route est déclenchée par la non-utilisation des appareils électriques pendant une période prédéterminée.

Alternativement, le déclenchement peut être réalisé par programmation selon un ou plusieurs modes différents. Par exemple, le procédé de gestion peut être programmé selon un mode vacances fonctionnant de date à date et/ou selon un mode saisonnier et/ou selon un mode de recharge dans lequel un délai réglable avant la coupure peut être déterminé en prenant en compte le délai de charge des appareils électriques à gérer etc.

Selon une caractéristique de l'invention, lorsque la consommation analysée est sensiblement égale à la valeur théorique correspondant à l'état de veille de l'appareil électrique à évaluer, le sectionneur d'alimentation électrique coupe l'alimentation électrique.

L'invention sera mieux comprise, grâce à la description ci-après, qui se rapporte à un mode de réalisation et une variante selon la présente invention, donnés à titre d'exemples non limitatifs et expliqués avec référence aux dessins schématiques annexés, dans lesquels:
- la figure 1 est une vue schématique de l'ensemble de contacteur selon l'invention,
- la figure 2 est une vue schématique de l'ensemble de contacteur représenté en figure 1 selon une variante de l'invention.
- la figure 3 est une vue schématique d'un tableau électrique selon l'invention,
- la figure 4 est une vue schématique du détail A indiqué en figure 3, et,
- la figure 5 est une vue schématique du détail B indiqué en figure 4.

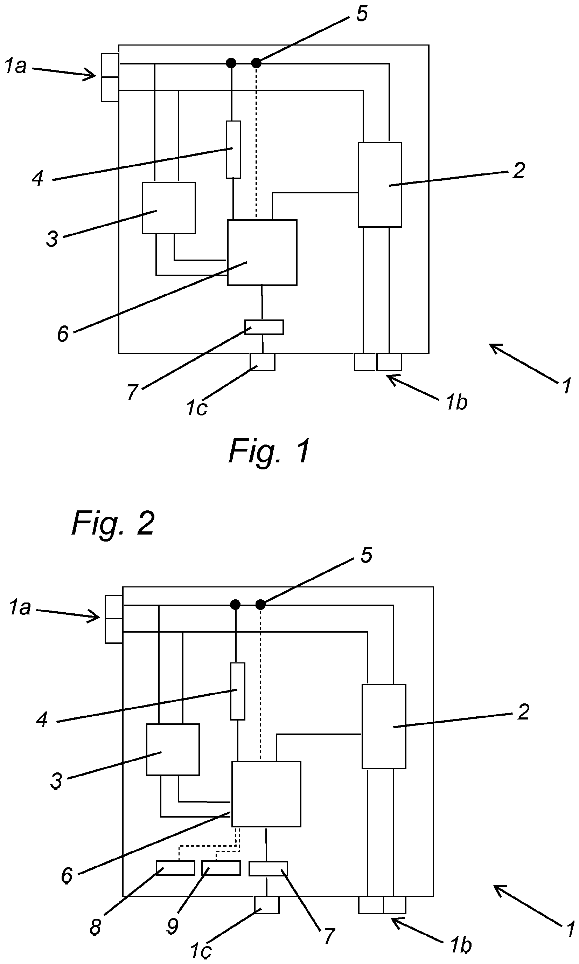

L'ensemble de contacteur, selon l'invention dans le mode de réalisation représenté aux figures 1 à 5, est un ensemble structurel unique. Bien entendu, en variante non représentée et selon l'invention, l'ensemble de contacteur peut être sous la forme d'un système où les éléments constitutifs dudit système appartiennent à des ensembles structurels différents.

En figures 1 et 2, l'ensemble de contacteur 1 comprend une borne d'entrée AC 1a appelée par la suite borne d'entrée 1a, et une borne de sortie AC 1b, appelée par la suite borne de sortie 1b. L'ensemble de contacteur 1 comporte en outre un connecteur 1c conçu pour la communication filaire des données mesurées et évaluées.

En outre, l'ensemble de contacteur 1 comprend un sectionneur d'alimentation 2, une unité de commande 3, l'unité de commande 3 contrôlant le sectionneur d'alimentation 2, et, un premier organe de mesure 4 conçu pour mesurer la tension à la borne d'entrée 1a de l'ensemble de contacteur 1.

Comme illustré par un trait discontinu aux figures 1 et 2, l'ensemble de contacteur 1 peut comprendre un deuxième organe de mesure 5, supplémentaire ou en remplacement du premier organe de mesure 4, ledit deuxième organe de mesure 5 mesurant l'intensité du courant à la borne d'entrée 1a de l'ensemble de contacteur 1. En outre, l'ensemble de contacteur 1 comprend une unité d'évaluation 6 pour évaluer lesdites données mesurées par le ou les organes de mesure 4, 5.

Dans l'exemple représenté à la figure 1, l'unité d'évaluation 6 est un microcontrôleur.

Avantageusement, l'unité de commande 3 coopère avec l'unité d'évaluation 6 de manière à ce que l'unité de commande 3 contrôle le sectionneur d'alimentation électrique 2 en fonction de l'évaluation des données mesurées.

Dans l'exemple illustré en figure 1, l'ensemble de contacteur 1 comprend également un organe de communication 7 conçu pour transmettre une alerte visuelle et/ou sonore à partir des données évaluées.

La figure 2 représente une variante de configuration de l'ensemble de contacteur 1 dans laquelle des modules supplémentaires peuvent être ajoutés tels qu'une extension de mémoire 8 ou bien encore un autre organe de communication 9 de type radio par exemple, ne nécessitant pas l'utilisation du connecteur 1c.

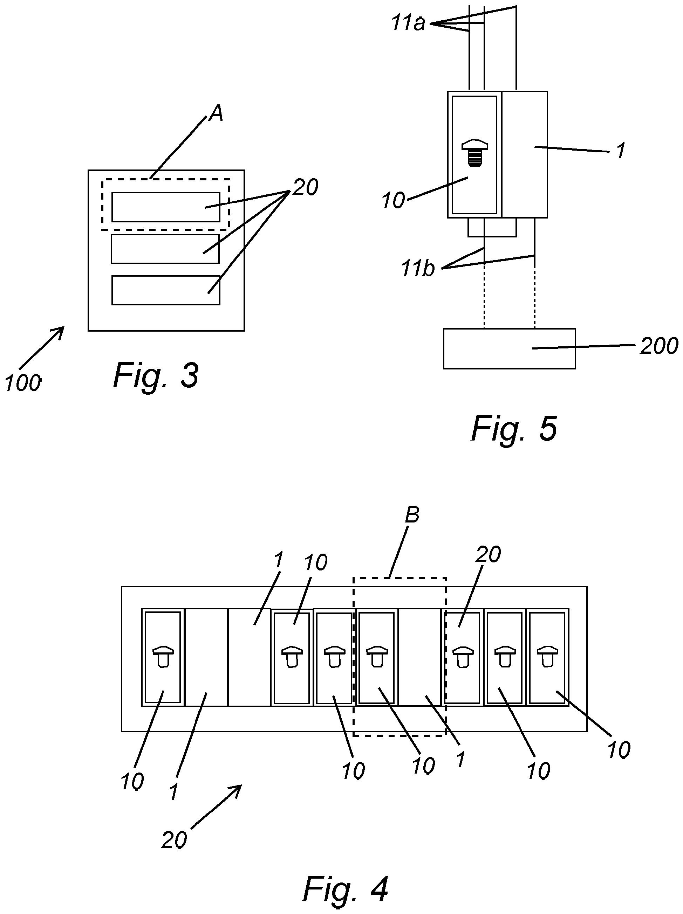

Selon l'invention, l'ensemble de contacteur 1 est préférentiellement positionné dans un tableau électrique 100 comme représenté en figure 3.

En figure 3 est illustré de manière très schématique un tableau électrique 100 comprenant plusieurs rangées 20 comprenant une pluralité de disjoncteurs 10 et une pluralité d'ensembles de contacteur 1. Une rangée 20 de composant est illustrée en figure 4, et comprend par exemple plusieurs disjoncteurs 10 disposés en alternance avec des ensembles de contacteur 1 selon l'invention. Chaque ensemble de contacteur 1 est couplé avec un disjoncteur 10 qui est relié à un appareil électrique 200 spécifique.

En figure 5, est illustré un détail de ce couplage disjoncteur 10/ensemble de contacteur 1. Avantageusement, chaque ensemble de contacteur 1 est positionné électriquement, dans le tableau électrique 100, en aval du disjoncteur 10. L'arrivée électrique est représentée par les lignées 11a et la sortie par les lignes 11b.

Selon l'invention, l'ensemble de contacteur 1 permet de mettre en oeuvre un procédé de gestion de l'alimentation électrique des appareils électriques 200 auquel ledit ensemble de contacteur 1 est associé.

Ainsi selon ce procédé de gestion, on mesure la tension et/ou l'intensité au niveau de la borne d'entrée 1a, via un ou plusieurs organes de mesure 4, 5. Ensuite, les mesures sont transmises à l'unité d'évaluation 6. L'unité d'évaluation 6 enregistre la/les mesures de la tension et/ou de l'intensité, et analyse la consommation électrique de l'appareil électrique 200 à partir de la comparaison d'au moins deux mesures de tension et/ou d'intensité.

Cette analyse permet ainsi de déterminer le niveau de consommation électrique de l'appareil électrique 200 en comparant les mesures de tension et/ou d'intensité avec une valeur théorique de consommation électrique correspondant à la consommation électrique normale en veille de l'appareil électrique 200.

Lorsque le niveau de consommation déterminé est sensiblement égal au niveau de consommation théorique, l'ensemble de contacteur 1 considère que l'appareil électrique 200 auquel il est associé est en veille et coupe donc l'alimentation électrique de ce dernier.

Lorsque le niveau de consommation déterminé est inférieur au niveau de consommation théorique, l'ensemble de contacteur 1 considère qu'il existe un défaut sur l'appareil électrique 200 et avertit par une alerte visuelle ou sonore ou analogue, l'utilisateur au moyen du ou des organes de communication 7, 9.

Lorsque le niveau de consommation déterminé est supérieur au niveau de consommation théorique, l'ensemble de contacteur 1 considère qu'il existe un défaut sur l'appareil électrique 200 et avertit par une alerte visuelle ou sonore ou autre l'utilisateur, voire coupe l'alimentation électrique de l'appareil électrique 200.

Dans l'exemple illustré en figure 5, l'ensemble de contacteur 1 est positionné entre le disjoncteur 10 et l'appareil électrique 200. L'ensemble de contacteur 1 mesure la consommation de l'appareil électrique 200 et analyse sur une période donnée les mesures afin d'identifier les variations de consommation. Ainsi, si l'appareil électrique 200 venait à ne plus fonctionner l'utilisateur peut être averti par les organes de communication 7, 9. De même si l'appareil électrique 200 présente une consommation qui augmente significativement, indiquant une panne à venir ou un dysfonctionnement, l'utilisateur en est également averti.

Concrètement, si on prend l'exemple d'un système audio-vidéo, l'ensemble de contacteur 1 est capable de discerner une ou plusieurs catégories de consommation. Par exemple, une consommation régulière de 30 à 100W sera considérée comme une première catégorie, une consommation entre 100 et 500W sera considérée comme une seconde catégorie. L'ensemble de contacteur 1 enregistre alors les consommations de cette première catégorie et est à même d'analyser les variations sur une période déterminée pour prévenir d'un défaut mineur et majeur. Une consommation au-delà de 500 W sera considérée comme une troisième catégorie, si la consommation dans la troisième catégorie est sensiblement égale à la somme des consommations des deux premières catégories aucun défaut ne sera signalé par contre si la consommation va au-delà, un défaut sera signalé.

Parallèlement, à la détermination du niveau de consommation et à partir des enregistrements de mesures réalisées en amont, le procédé de gestion comprend une étape de détermination d'une routine de consommation. Cette routine de consommation permet de rendre l'ensemble de contacteur 1 autonome dans la gestion de la consommation d'énergie de l'appareil électrique 200 auquel il est associé.

Pour ce faire, chaque ensemble de contacteur 1 est configuré en fonction de son usage. Par exemple si un ensemble de contacteur 1 est associé à un réfrigérateur, l'ensemble de contacteur sera configuré pour analyser le temps de mise en route du refroidisseur par rapport à son temps d'arrêt et l'analyse de la consommation globale du réfrigérateur afin d'identifier un défaut mineur présent ou avenir.

Dans un deuxième exemple, l'ensemble de contacteur 1 est associé à un système audio-vidéo. L'ensemble de contacteur 1 enregistre en continu les mesures de tension et/ou d'intensité afin de déterminer une routine de consommation journalière heure par heure de ce système audio-vidéo. Par exemple, pour un jour X, grâce aux mesures, on arrive à identifier la période de fonctionnement du système audio-vidéo, par exemple de 9h à 10h et de 18h à 23h ; la période de veille du système audio-vidéo, par exemple de 00h00 à 9h, de 10h à 18h et de 23h30 à 00h00. Avec ces enregistrements, l'ensemble de contacteur 1 va couper l'alimentation du système audio-vidéo à l'heure prévisible d'arrêt de l'utilisation ou quelques minutes après la mise veille, par exemple pour le jour X décrit au paragraphe précédent, l'ensemble de contacteur 1 va couper l'alimentation électrique de 00h00 à 8h30 puis alimenter le système audio-vidéo de 8h30 jusqu'à la mise en veille du système audio-vidéo.

Ainsi, la routine de consommation journalière permet de déterminer une routine hebdomadaire qui permet de déterminer une routine mensuelle voire annuelle, ce qui permet à terme d'économiser de l'énergie en se basant sur les habitudes de consommation des consommateurs.

Selon l'invention, le procédé de gestion fonctionne en continu et apprend des évolutions de consommation.

Selon une caractéristique de l'invention, on peut déroger aux routines mises en place, par exemple, si le système audio-vidéo n'est pas mis en route dans la plage horaire prédite, la fois suivante, cette plage ne sera plus reconnue comme étant une plage horaire d'activité au niveau d'une routine journalière mais peut toujours l'être au niveau d'une routine mensuelle voire annuelle.

De même, si le système audio-vidéo est en fonctionnement dans une plage prédite comme plage horaire de veille, l'ensemble de contacteur 1 ne mettra pas le système audio-vidéo en veille immédiatement, et enregistrera la nouvelle plage horaire de fonctionnement.

Bien entendu, l'exemple appliqué à un système audio-vidéo n'est pas limitatif et peut être appliqué à n'importe quel appareil électrique 200.

Le procédé de gestion d'alimentation électrique qui vient d'être décrit peut être mis en oeuvre en continu dès lors qu'un ensemble de contacteur 1 selon l'invention équipe un tableau électrique 100 et que ledit ensemble de contacteur 1 est associé à un appareil électrique spécifique 200 ou bien selon des règles que nous allons détailler ci-dessous.

Bien entendu, il est possible qu'en mise en route ou une extinction forcée du procédé de gestion soient mises en oeuvre. Par exemple, la mise en veille du local dans lequel l'ensemble de contacteur 1 est installé peut être une information prioritaire permettant la mise en route forcée du procédé de gestion. Cette mise en route forcée peut être réalisée à l'aide d'un média extérieur par exemple un interrupteur ou une serrure électrique ou une alarme permettant la commande de l'ensemble de contacteur 1. Ainsi, le consommateur peut quitter son local en indiquant la mise en veille de l'appartement, quelque soit l'heure et le moment de la journée, l'ensemble des circuits prévus étant mis en veille tant que le consommateur n'aura pas déclaré sa présence.

Il est possible également de fixer des plages horaire prédéfinies, par exemple imposer la coupure du circuit électrique d'un appareil électrique 200 à par exemple 22h30. Dans ce cas, quoi qu'il arrive, l'ensemble de contacteur 1 coupera le circuit électrique à 22h30 et le rétablira sur l'horaire autorisé.

A tout moment, par l'intermédiaire d'une action via un média spécifique de type application ou interrupteur, il est possible de mettre en route l'ensemble de contacteur de son choix.

Dans un autre exemple, l'ensemble de contacteur 1 peut comprendre un calendrier intégré permettant de fonctionner selon plusieurs modes prédéfinis tels qu'un mode vacances, un mode saisonnier, un mode jour/nuit, etc. Par exemple, pour le mode vacances, une période est déterminée comme étant une période d'inactivité et d'absence dans laquelle seuls certains appareils électriques doivent être fonctionnels tel que le réfrigérateur par exemple.

Dans un autre exemple, pour le mode saisonnier, en hiver, on programme pour que la climatisation ou les ventilateurs soient sans alimentation et en été que les radiateurs soient coupés.

Dans un autre exemple, l'ensemble de contacteur 1 peut couper certaines lignes électriques ou prises particulières avec un délai réglable de sorte que les appareils électriques 200 branchés sur ces prises ou lignes puissent se recharger avant la coupure réalisée par l'ensemble de contacteur 1, c'est le cas par exemple des téléphones sans fil, des brosses à dents électriques, etc.

Dans un autre exemple d'application, l'unité d'évaluation détermine le niveau de consommation électrique du local et lorsque ledit niveau de consommation électrique est sensiblement égal à une valeur théorique déterminée correspondant à l'inactivité des occupants du local, le sectionneur d'alimentation coupe l'alimentation électrique des radiateurs, la coupure étant réalisée de manière contrôlée afin de réaliser une régulation du chauffage.

Ainsi, lorsqu'une inactivité des occupants est détectée et que ces derniers sont présents dans le local, la température est régulée de manière à ce qu'elle corresponde par exemple à une température de consigne spécifique à la nuit. Dans cet exemple, si les occupants ont choisi une température de confort 20°C, la température pendant leur inactivité bien qu'ils soient présents dans le local sera par exemple de 17°C.

Dans un autre exemple d'application, l'unité d'évaluation coopérant avec un interrupteur de présence ou détecteur de présence ou déterminant à partir du niveau de consommation électrique l'absence des occupants dans le local, permet à partir des données conservées et apprises de connaître la durée d'absence et par un calcul spécifique de calculer quelle température il convient d'appliquer au local afin que le niveau de consommation électrique dudit local soit le plus réduit possible tout en garantissant une température de confort en cas de présence dans le local des occupants.

Dans un autre exemple d'application de l'invention, l'ensemble de contacteur permet d'asservir également le système de chauffage ou la climatisation du à la détection d'ouverture d'une fenêtre ou d'une porte.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Tableau électrique (100) comprenant au moins un disjoncteur (10) relatif à un appareil électrique (200), le tableau électrique (100) comprenant en outre au moins un ensemble de contacteur (1) positionné électriquement, dans le tableau électrique (100), l'ensemble de contacteur comprenant :
- une unité de commande (3),
- un sectionneur d'alimentation électrique (2) contrôlé par l'unité de commande (3),
- un organe de mesure (4, 5),
- une unité d'évaluation (6) des données mesurées par ledit organe de mesure (4, 5), l'unité d'évaluation étant configurée pour déterminer un niveau de consommation électrique d'au moins un appareil électrique en fonction des données mesurées et/ou un niveau de consommation électrique du local en fonction des données mesurées,
l'unité de commande (3) coopérant avec l'unité d'évaluation (6) de manière à ce que l'unité de commande (3) contrôle le sectionneur d'alimentation électrique (2) en fonction de l'évaluation des données mesurées, le sectionneur d'alimentation électrique (2) étant configuré pour couper l'alimentation électrique d'au moins un appareil électrique si le niveau de consommation déterminé par l'unité d'évaluation est sensiblement égal à une valeur théorique correspondant à l'état de veille dudit appareil électrique, la valeur théorique associée à l'état de veille correspondant à une valeur définie comme indiquant une non-utilisation du ou des appareils électriques ou une période d'absence ou d'inactivité du ou des occupants du local.

2. Tableau électrique selon la revendication 1, dans lequel l'ensemble de contacteur (1) est positionné électriquement en aval du disjoncteur (10).

3. Tableau électrique selon l'une quelconque des revendications 1 ou 2, comprenant une pluralité de disjoncteurs (10) et une pluralité d'ensembles de contacteur (1), chaque ensemble de contacteur étant couplé avec un disjoncteur (10) qui est configuré pour être relié à un appareil électrique (200) spécifique.

4. Tableau électrique selon l'une quelconque des revendications 1 à 3, dans lequel l'ensemble de contacteur (1) comprend un boitier de mesure de consommation d'énergie ou de comptage, formant un contacteur électrique, dans lequel sont positionnés l'unité de commande (3), le sectionneur d'alimentation électrique (2), au moins un organe de mesure (4, 5) et l'unité d'évaluation (6).

5. Tableau électrique selon l'une quelconque des revendications 1 à 4, **caractérisé en ce que** l'organe de mesure (4, 5) est conçu pour mesurer la tension ou l'intensité.

6. Tableau électrique, selon l'une quelconque des revendications 1 à 5, **caractérisé en ce que** l'unité d'évaluation (6) est un microcontrôleur.

7. Tableau électrique selon l'une quelconque des revendications 1 à 6, **caractérisé en ce que** l'unité d'évaluation (6) est conçue pour enregistrer les données mesurées et déterminer à partir des enregistrements une routine de consommation.

8. Tableau électrique, selon l'une quelconque des revendications 1 à 7, **caractérisé en ce que** ledit ensemble de contacteur (1) comprend au moins un organe de communication (7, 9) conçu pour transmettre une alerte visuelle et/ou sonore et/ou un ordre à un périphérique à partir de l'évaluation des données mesurées.

9. Tableau électrique selon l'une quelconque des revendications 1 à 8, dans lequel ledit ensemble de contacteur est configuré pour coopérer avec un interrupteur de présence ou un détecteur de présence actionné par les occupants du local.

10. Tableau électrique selon la revendication 9, dans lequel un niveau d'activité est déterminé par l'unité d'évaluation (6) à partir du niveau de consommation mesuré et/ou à partir d'une information transmise par l'interrupteur de présence ou par le détecteur de présence.

11. Procédé de gestion de la consommation électrique d'un appareil électrique (200) comprenant les étapes suivantes :
- mesure de la tension et/ou mesure de l'intensité par un organe de mesure d'un ensemble de contacteur (1) à partir d'un tableau électrique selon l'une quelconque des revendications 1 à 10,
- enregistrement de la mesure de la tension et/ou de l'intensité par l'unité d'évaluation (6) de l'ensemble de contacteur (1),
- analyse de la consommation électrique à partir de la comparaison d'au moins deux mesures de tension et/ou de l'intensité par l'unité d'évaluation (6),
- détermination du niveau de consommation en comparant les mesures analysées avec une valeur théorique de consommation correspondant à la consommation normale en veille de l'appareil par l'unité d'évaluation (6),
- détermination d'une routine de consommation à partir du ou des enregistrements de la mesure de la tension et/ou de l'intensité.

12. Procédé de gestion selon la revendication 11, dans lequel la détermination d'une routine de consommation est réalisée sur une période prédéterminée.

13. Procédé de gestion selon l'une quelconque des revendications 10 ou 12, **caractérisé en ce que** le procédé de gestion comprend une étape de coupure de l'alimentation électrique par le sectionneur d'alimentation électrique (2) et/ou une étape d'alerte au moyen de l'organe de communication (7, 9) de l'ensemble de contacteur (1) sont réalisées selon le niveau de consommation déterminé.

14. Procédé de gestion selon l'une quelconque des revendications 11 à 13, **caractérisé en ce que** le procédé de gestion comprend une étape d'application de la routine de consommation.

15. Procédé de gestion selon l'une quelconque des revendications 11 à 14, dans lequel lorsque la consommation analysée est sensiblement égale à la valeur théorique correspondant à l'état de veille de l'appareil électrique (200), le sectionneur d'alimentation électrique (2) coupe l'alimentation électrique dudit appareil électrique.

## Patentansprüche

1. Elektrische Schalttafel (100), die mindestens einen auf ein Elektrogerät (200) bezogenen Leistungsschalter (10) umfasst, wobei die elektrische Schalttafel (100) weiter mindestens eine Schützbaugruppe (1) umfasst, die elektrisch in der elektrischen Schalttafel (100) liegt, wobei die Schützbaugruppe umfasst:
- eine Steuerungseinheit (3),
- einen von der Steuerungseinheit (3) gesteuerten Stromversorgungstrennschalter (2),
- eine Messeinrichtung (4, 5),
- eine Auswertungseinheit zum Auswerten (6) der von der Messeinrichtung (4, 5) gemessenen Daten, wobei die Auswertungseinheit dafür ausgebildet ist, ein Stromverbrauchsniveau von mindestens einem Elektrogerät in Abhängigkeit von den gemessenen Daten, und/oder ein Stromverbrauchsniveau des Raumes in Abhängigkeit von den gemessenen Daten zu bestimmen,
wobei die Steuerungseinheit (3) mit der Auswertungseinheit (6) zusammenwirkt, sodass die Steuerungseinheit (3) den Stromversorgungstrennschalter (2) in Abhängigkeit von der Auswertung der gemessenen Daten steuert, wobei der Stromversorgungstrennschalter (2) dazu ausgebildet ist, die Stromversorgung von mindestens einem Elektrogerät zu unterbrechen, wenn das von der Auswertungseinheit bestimmte Verbrauchsniveau im Wesentlichen gleich einem theoretischen Wert ist, der dem Standby-Zustand des Elektrogeräts entspricht, wobei der dem Standby-Zustand zugeordnete theoretische Wert einem Wert entspricht, der als einen Nichtgebrauch des oder der Elektrogeräte oder einen Abwesenheits- oder Inaktivitätszeitraum des oder der Nutzer des Raumes anzeigend definiert ist.

2. Elektrische Schalttafel nach Anspruch 1, wobei die Schützbaugruppe (1) elektrisch hinter dem Leistungsschalter (10) liegt.

3. Elektrische Schalttafel nach einem der Ansprüche 1 oder 2, die eine Vielzahl von Leistungsschaltern (10) und eine Vielzahl von Schützbaugruppen (1) umfasst, wobei jede Schützbaugruppe mit einem Leistungsschalter (10) gekoppelt ist, welcher dafür ausgebildet ist, mit einem spezifischen Elektrogerät (200) verbunden zu werden.

4. Elektrische Schalttafel nach einem der Ansprüche 1 bis 3, wobei die Schützbaugruppe (1) ein Stromverbrauchs-Mess- oder Zählergehäuse umfasst, welches ein elektrisches Schütz bildet, in welchem die Steuerungseinheit (3), der Stromversorgungstrennschalter (2), mindestens eine Messeinrichtung (4, 5) und die Auswertungseinheit (6) liegen.

5. Elektrische Schalttafel nach einem der Ansprüche 1 bis 4, **dadurch gekennzeichnet, dass** die Messeinrichtung (4, 5) dafür ausgestaltet ist, die Spannung oder die Stärke zu messen.

6. Elektrische Schalttafel nach einem der Ansprüche 1 bis 5, **dadurch gekennzeichnet, dass** die Auswertungseinheit (6) ein Mikrocontroller ist.

7. Elektrische Schalttafel nach einem der Ansprüche 1 bis 6, **dadurch gekennzeichnet, dass** die Auswertungseinheit (6) dafür ausgestaltet ist, die gemessenen Daten aufzuzeichnen und anhand der Aufzeichnungen eine Verbrauchsroutine zu bestimmen.

8. Elektrische Schalttafel nach einem der Ansprüche 1 bis 7, **dadurch gekennzeichnet, dass** die Schützbaugruppe (1) mindestens eine Kommunikationseinrichtung (7, 9) umfasst, die dafür ausgestaltet ist, anhand der Auswertung der gemessenen Daten einen optischen und/oder akustischen Alarm und/oder einen Befehl an ein Peripheriegerät zu übertragen.

9. Elektrische Schalttafel nach einem der Ansprüche 1 bis 8, wobei die Schützbaugruppe dafür ausgebildet ist, mit einem Präsenzschalter oder einem Präsenzdetektor zusammenzuwirken, der von den Nutzern des Raumes aktiviert wird.

10. Elektrische Schalttafel nach Anspruch 9, wobei von der Auswertungseinheit (6) anhand des gemessenen Verbrauchsniveaus und/oder anhand einer vom Präsenzschalter oder vom Präsenzdetektor übertragenen Information ein Aktivitätsniveau bestimmt wird.

11. Verfahren zur Verwaltung des Stromverbrauchs eines Elektrogeräts (200), das die folgenden Schritte umfasst:
- Messen der Spannung und/oder Messen der Stärke durch eine Messeinrichtung einer Schützbaugruppe (1) anhand einer elektrischen Schalttafel nach einem der Ansprüche 1 bis 10,
- Aufzeichnen der Messung der Spannung und/oder der Stärke durch die Auswertungseinheit (6) der Schützbaugruppe (1),
- Analysieren des Stromverbrauchs anhand des Vergleichs von mindestens zwei Messungen der Spannung und/oder der Stärke durch die Auswertungseinheit (6),
- Bestimmen des Verbrauchsniveaus durch Vergleichen der analysierten Messungen mit einem theoretischen Verbrauchswert, der dem normalen Standby-Verbrauch des Geräts entspricht, durch die Auswertungseinheit (6),
- Bestimmen einer Verbrauchsroutine anhand der Aufzeichnung(en) der Messung der Spannung und/oder der Stärke.

12. Verwaltungsverfahren nach Anspruch 11, wobei das Bestimmen einer Verbrauchsroutine über einen vorbestimmten Zeitraum ausgeführt wird.

13. Verwaltungsverfahren nach einem der Ansprüche 10 oder 12, **dadurch gekennzeichnet, dass** das Verwaltungsverfahren einen Schritt des Unterbrechens der Stromversorgung durch den Stromversorgungstrennschalter (2), und/oder einen Schritt des Alarmierens mittels der Kommunikationseinrichtung (7, 9) der Schützbaugruppe (1) umfasst, die je nach dem bestimmten Verbrauchsniveau ausgeführt werden.

14. Verwaltungsverfahren nach einem der Ansprüche 11 bis 13, **dadurch gekennzeichnet, dass** das Verwaltungsverfahren einen Schritt des Anwendens der Verbrauchsroutine umfasst.

15. Verwaltungsverfahren nach einem der Ansprüche 11 bis 14, wobei, wenn der analysierte Verbrauch im Wesentlichen gleich dem theoretischen Wert ist, der dem Standby-Zustand des Elektrogeräts (200) entspricht, der Stromversorgungstrennschalter (2) die Stromversorgung des Elektrogeräts unterbricht.

## Claims

1. An electrical panel (100) comprising at least one circuit-breaker (10) related to an electrical apparatus (200), the electrical panel (100) comprising in addition at least one contactor assembly (1) electrically positioned in the electrical panel (100), the contactor assembly comprising:
- a control unit (3),
- a power supply disconnector (2) controlled by the control unit (3),
- a measuring member (4, 5),
- a evaluation unit (6) for evaluating the data measured by said measuring member (4, 5), the evaluation unit being configured to determine a power consumption level of at least one electrical apparatus based on the measured data and/or a power consumption level of the premises based on the measured data,
the control unit (3) cooperating with the evaluation unit (6) in such a way that the control unit (3) controls the power supply disconnector (2) based on the evaluation of the measured data, the power supply disconnector (2) being configured to cut off the power supply of at least one electrical apparatus if the consumption level determined by the evaluation unit is substantially equal to a theoretical value corresponding to the standby state of said electrical apparatus, the theoretical value associated with the standby state corresponding to a value defined as indicating a non-use of the electrical apparatus/apparatuses or a period of absence or inactivity of the occupant(s) of the premises.

2. The electrical panel according to claim 1, wherein the contactor assembly (1) is electrically positioned downstream of the circuit-breaker (10).

3. The electrical panel according to any one of claims 1 or 2, comprising a plurality of circuit-breakers (10) and a plurality of contactor assemblies (1), each contactor assembly being coupled with a circuit-breaker (10) which is configured to be connected to a specific electrical apparatus (200).

4. The electrical panel according to any one of claims 1 to 3, wherein the contactor assembly (1) comprises a metering or an energy consumption measuring box forming an electrical contactor, wherein the control unit (3), the power supply disconnector (2), at least one measuring member (4, 5) and the evaluation unit (6) are positioned.

5. The electrical panel according to any one of claims 1 to 4, **characterized in that** the measuring member (4, 5) is designed to measure the voltage or the intensity.

6. The electrical panel according to any one of claims 1 to 5, **characterized in that** the evaluation unit (6) is a microcontroller.

7. The electrical panel according to any one of claims 1 to 6, **characterized in that** the evaluation unit (6) is designed to record the measured data and to determine, from the records, a consumption routine.

8. The electrical panel according to any one of claims 1 to 7, **characterized in that** said contactor assembly (1) comprises at least one communication member (7, 9) designed to transmit a visual and/or sound alert and/or an order to a peripheral device from the evaluation of the measured data.

9. The electrical panel according to any one of claims 1 to 8, wherein said contactor assembly is configured to cooperate with a presence switch or a presence detector actuated by the occupants of the premises.

10. The electrical panel according to claim 9, wherein an activity level is determined by the evaluation unit (6) from the measured consumption level and/or from an information transmitted by the presence switch or by the presence detector.

11. A method for control the power consumption of an electrical apparatus (200) comprising the following steps:
- measuring the voltage and/or measuring the intensity by a measuring member of a contactor assembly (1) from an electrical panel according to any one of claims 1 to 10,
- recording the measurement of the voltage and/or of the intensity by the evaluation unit (6) of the contactor assembly (1),
- analyzing the power consumption from the comparison of at least two voltage and/or intensity measurements by the evaluation unit (6),
- determining the consumption level by comparing the measurements analyzed with a consumption theoretical value corresponding to the normal standby consumption of the apparatus by the evaluation unit (6),
- determining a consumption routine from the record(s) of the voltage and/or intensity measurement.

12. The control method according to claim 11, wherein the determination of a consumption routine is performed over a predetermined period.

13. The control method according to any one of claims 10 or 12, **characterized in that** the control method comprises a power supply cut-off step by means of the power supply disconnector (2) and/or an alert step by means of the communication member (7, 9) of the contactor assembly (1) which is/are carried out according to the determined consumption level.

14. The control method according to any one of claims 11 to 13, **characterized in that** the control method comprises a step of applying the consumption routine.

15. The control method according to any one of claims 11 to 14, wherein, when the analyzed consumption is substantially equal to the theoretical value corresponding to the standby state of the electrical apparatus (200), the power supply disconnector (2) cuts off the power supply of said electrical apparatus.
